# FASCICULE DE BREVET EUROPEEN

(11) **EP 0 373 067 B1**
(45) Date de publication et mention de la délivrance du brevet: **05.10.1994**
(21) Numéro de dépôt: 89403370.3
(22) Date de dépôt: 05.12.1989
(51) Int. Cl.: H04L 7/033

(54) **Dispositif de synchronisation de l'émission et de la réception d'une station d'un réseau de communication notamment pour véhicule automobile**
Sende-Empfangssynchronisationsvorrichtung einer Station eines Kommunikationsnetzes, insbesondere für ein Kraftfahrzeug
Device for the synchronization of sending and receiving by a station in a communication network, especially for an automotive vehicle

(30) Priorité: 07.12.1988 FR 8816087
(43) Date de publication de la demande: 13.06.1990
(73) Titulaire: AUTOMOBILES PEUGEOT, 75116 Paris (FR); AUTOMOBILES CITROEN, 92200 Neuilly-sur-Seine (FR)
(72) Inventeur: Malville, Joel, F-60230 Chambly (FR); Herbault, Patrick, F-75016 Paris (FR); Abou, Bruno, F-75014 Paris (FR)
(74) Mandataire: Polus, Camille

(56) Documents cités:
- GB-A- 2 015 308
- US-A- 4 696 016
- ELEKTRONIK, vol. 27, no. 2, février 1978, pages 52-56; W. BEIFUSS: "Digitale Phasensynchronisiereinheit für synchrone Datenübertragung"

## Description

La présente invention concerne un dispositif de synchronisation de l'émission et de la réception d'une station d'un réseau de communication notamment pour véhicule automobile.

Lorsque dans un réseau de communication, différentes stations sont interconnectées entre elles, elles réalisent localement des opérations de communication à partir de leur propre horloge locale.

Ces horloges locales fournissent des références de temps pour interpréter en réception et engendrer en émission des trames de communication.

Ainsi, en émission, une station émettrice engendre des données au rythme de son horloge locale sous la forme d'un signal encodé.

Afin de faciliter l'interprétation des trames de données, l'encodage du signal peut contenir à chaque bit. l'information d'horloge et on peut alors utiliser par exemple le codage par largeur d'impulsions ou le codage biphasé, et leurs variantes.

D'autres techniques ne fournissent quant à elles pas de référence de temps à chaque bit. En particulier, le codage NRZ (Non Retour à Zéro), reproduit directement les données. Seules les transitions des données permettent de repérer les transitions de l'horloge de la station émettrice.

Par exemple le document US-A-4.696.016 décrit un circuit de récupération d'un signal d'horloge pour des données à retour à zéro.

Cependant différents problèmes se posent.

En effet, suivant le type d'oscillateur utilisé localement pour chaque station, ces dernières n'ont pas la même fréquence d'horloge locale pour la génération et l'analyse des trames de données.

Par ailleurs, compte tenu du fait que plusieurs stations sont aptes à émettre simultanément sur un réseau, il est nécessaire de gérer les problèmes de collision éventuels. Aussi, chaque station est tenue de comparer en permanence le bit qu'elle émet avec le bit présent sur le réseau.

Pour des raisons physiques liées aux lignes de transmission d'informations, au nombre de stations connectées à celles-ci, aux caractéristiques des circuits émetteur-récepteur de lignes, etc..., différents retards suivant le type de fronts émis, à savoir montants ou descendants, sont introduits lors de cette transmission. On sait que ces retards engendrent des problèmes lors de l'analyse des signaux.

Le but de l'invention est donc de résoudre ces problèmes en proposant un dispositif de synchronisation d'une station d'un réseau de communication qui soit simple, fiable et qui permette d'effectuer un traitement de données correct, intégrant les réalités physiques du réseau.

A cet effet, l'invention a pour objet un dispositif de synchronisation de l'émission et de la réception d'une station d'un réseau de communication notamment pour véhicule automobile, du type comportant des moyens de génération de signaux d'échantillonnage d'informations présentes sur le réseau, caractérisé en ce qu'il comporte des moyens de chargement dans les moyens de génération, d'au moins une valeur de synchronisation correspondant à au moins un temps de propagation des informations dans le réseau pour synchroniser la station en fonction de caractéristiques de transmission du réseau, par décalage des moyens de génération, cette valeur de synchronisation correspondant au temps de propagation d'un front montant ou d'un front descendant ou à un temps moyen de propagation des fronts montants et descendants des informations dans le réseau.

Selon un mode de réalisation, les moyens de chargement comprennent des moyens de sélection de l'une ou l'autre de deux valeurs de synchronisation en fonction du type de front d'informations présent sur le réseau, les valeurs de synchronisation correspondant l'une au temps de propagation d'un front montant d'informations dans le réseau et l'autre au temps de propagation d'un front descendant.

Selon un autre mode de réalisation, la valeur de synchronisation correspond à un temps moyen de propagation des fronts montants et descendants dans le réseau.

L'invention sera mieux comprise à l'aide de la description qui va suivre, donnée uniquement à titre d'exemple et faite en se référant aux dessins annexés, sur lesquels :
- la Fig.1 représente un certain nombre de signaux illustrant le fonctionnement d'une station d'un réseau de communication en émission;
- les Fig.2 et 3 illustrent des retards introduits lors de la transmission d'informations;
- les Fig.4 et 5 représentent des moyens de génération de signaux d'échantillonnage, de l'état de la technique;
- la Fig.6 représente différents signaux illustrant le fonctionnement des moyens décrits sur les Fig.4 et 5;
- la Fig.7 représente différents signaux illustrant le fonctionnement d'un second mode de réalisation de moyens de génération de signaux d'échantillonnage de l'état de la technique;
- la Fig.8 représente un dispositif de synchronisation selon l'invention;
- la Fig.9 représente différents signaux illustrant le fonctionnement du dispositif selon l'invention représenté sur la Fig.8;
- la Fig. 10 représente un second mode de réalisation d'un dispositif selon l'invention; et
- la Fig. 11 représente un circuit d'optimisation de l'horloge locale d'une station entrant dans la constitution d'un dispositif selon l'invention.

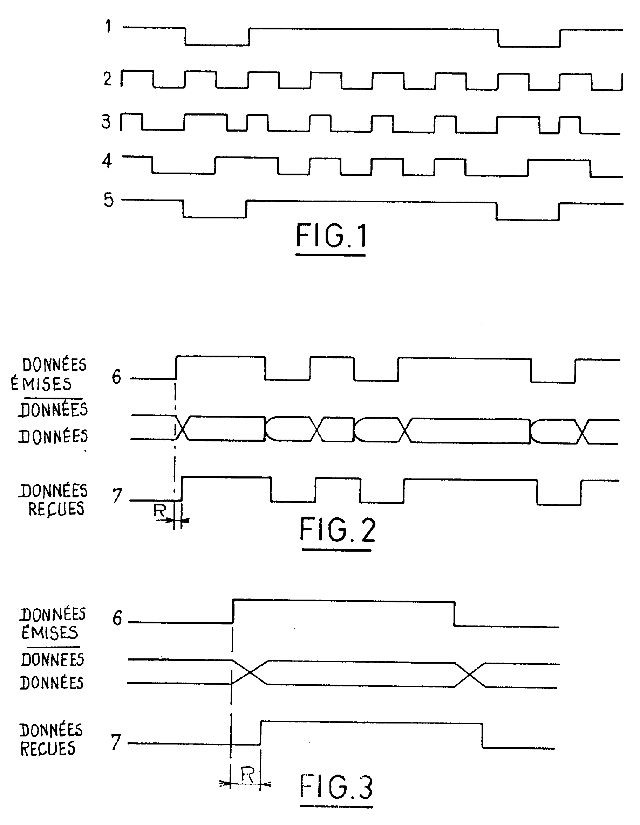

Ainsi qu'on peut le voir sur la Fig. 1, différentes stations interconnectées dans un réseau de communication, réalisent localement des opérations de communication à partir de leur propre horloge locale. Ces horloges fournissent des références de temps pour interpréter en réception et engendrer en émission des trames de communication.

Ainsi par exemple, en émission une station émettrice engendre des données 1 au rythme de son horloge locale 2 sous forme d'un signal encodé. Pour faciliter l'interprétation de cette trame, l'encodage du signal peut contenir à chaque bit, l'information d'horloge en utilisant par exemple un codage par largeur d'impulsions 3, un codage biphasé 4 et leurs variantes.

Par ailleurs, il existe également d'autres techniques qui ne fournissent pas de référence de temps à chaque bit. C'est en effet le cas en particulier pour le codage NRZ (Non Retour à Zéro) illustré par le signal 5 sur cette Fig. 1.

Seules les transitions des données permettent alors de repérer les transitions de l'horloge de la station émettrice.

Suivant le type d'oscillateur utilisé notamment pour chaque station, que ce soit un oscillateur à quartz, un résonateur céramique ou un oscillateur du type résistance-condensateur, ces dernières n'ont pas la même fréquence d'horloge locale pour la génération et l'analyse des trames de données.

Il est cependant possible d'émettre l'hypothèse suivant laquelle bien qu'une horloge soit peu précise, elle reste stable durant le temps d'une trame de données.

Par ailleurs, compte tenu du fait que plusieurs stations sont aptes à émettre simultanément sur les réseaux, il est nécessaire de gérer les problèmes de collision éventuels.

Aussi chaque station est tenue de comparer en permanence les bits qu'elle émet avec le bit présent sur le réseau. Pour des raisons physiques liées aux lignes de communication, au nombre de stations connectées à celles-ci, aux caractéristiques des circuits émetteur-récepteur de lignes, etc..., différents retards R suivant le type de fronts émis, à savoir montants ou descendants, sont introduits comme on peut le voir sur la Fig.2, entre l'émission et la réception de données.

La Fig.3 représente quant à elle un agrandissement d'une partie des signaux représentés sur cette Fig.2, et on peut ainsi constater facilement qu'entre des données émises 6 et des données reçues 7, apparaît un retard R. Les signaux données et données représentés entre les signaux 6 et 7 sont les signaux réellement présents sur les lignes de transmission et leur complément.

Dans la description qui va suivre, on va utiliser un codage de type NRZ. Bien entendu, d'autres types de codage peuvent tout aussi bien être utilisés.

Pour ce type de codage NRZ, chaque station est tenue d'échantillonner le bit présent sur le réseau, par exemple aux trois-quart de sa durée, cette valeur pouvant être différente pour d'autres types de codage.

La station émettrice doit tenir compte des délais de transmission des bits lors de l'échantillonnage.

Le calibrage du bit émis est effectué à l'aide d'un compteur incrémenté par une horloge locale de la station et l'échantillonnage du bit reçu est effectué de la même manière. Dans la pratique, ces deux tâches sont généralement réalisées par un même compteur.

Dans la description qui va suivre, on considère la durée typique d'un bit égale à 16 unités de temps.

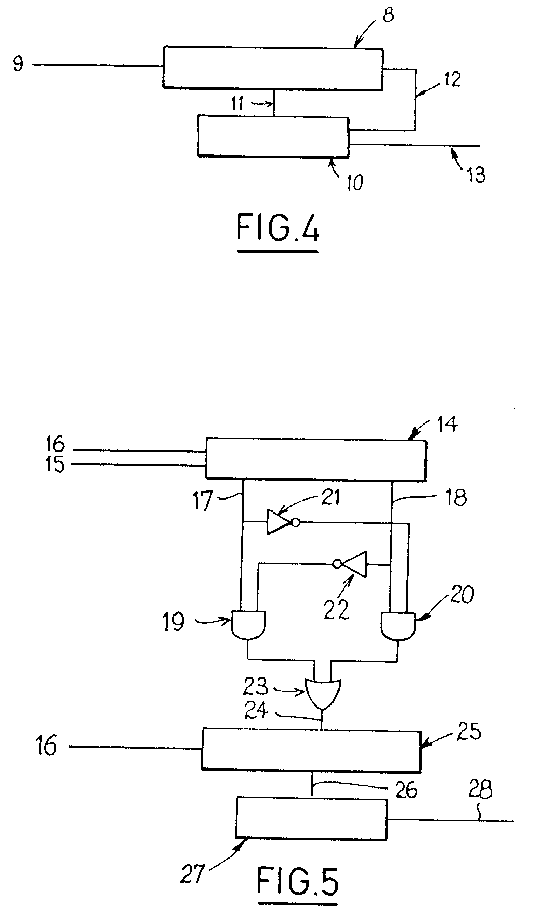

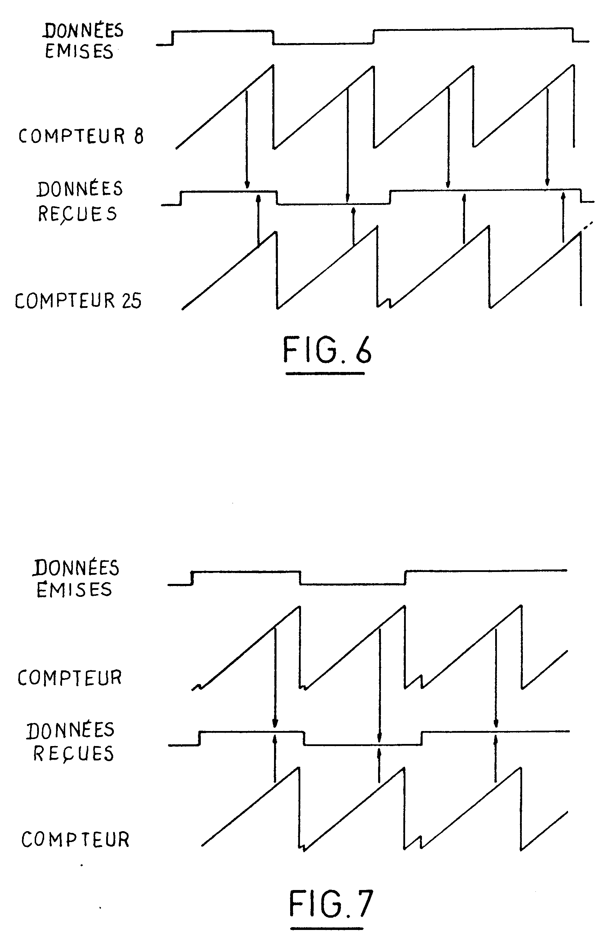

Sur les Fig.4 et 5, on a représenté des moyens de génération de signaux de synchronisation d'une station, de l'état de la technique.

Sur la Fig.4, lorsque la station est en émission, un compteur 8 du type modulo 16 est incrémenté par une horloge locale 9 d'une station. Un décodeur 10 relié aux sorties 11 de ce compteur 8 décode ces sorties afin d'engendrer un signal de réinitialisation 12 pour le compteur et une impulsion 13 pour l'échantillonnage du bit présent sur le ré seau, par exemple aux trois-quart de sa durée dans l'exemple décrit, en vue de détecter une éventuelle collision avec un bit émis simultanément par une autre station reliée à ce réseau.

Sur la Fig.5, lorsque la station est en réception, un registre à décalage 14 reçoit un signal de données 15 présent sur le réseau et décale cette donnée au rythme d'une horloge locale 16 de la station, à destination de ses sorties 17 et 18. La sortie 17 du registre à décalage 14 est reliée à une entrée d'une porte ET 19, tandis que la sortie 18 est reliée à une entrée d'une porte ET 20.

La sortie 17 du registre à décalage 14 est également reliée à travers un inverseur 21 à une autre entrée de la porte ET 20, tandis que la sortie 18 du registre à décalage 14 est également reliée à travers un inverseur 22 à une autre entrée de la porte ET 19.

Les sorties des portes ET 19 et 20 sont reliées à une entrée d'une porte OU 23, de manière à engendrer un signal 24 de réinitialisation d'un compteur 25, en sychronisme des fronts montant et descendant du signal de données 15 à une période près d'horloge locale 16, également reliée à ce compteur 25.

Les sorties 26 de ce compteur sont reliées à un décodeur 27 de sorte que celui-ci engendre en sortie, c'est à dire en 28, un top d'échantillonnage du bit présent sur le réseau.

Les différents signaux illustrant le fonctionnement des moyens représentés sur ces figures 4 et 5, sont représentés sur la Fig.6. On peut constater sur cette figure, une imprécision importante du point d'échantillonnage de la donnée présente sur le réseau, d'une part pour la station émettrice, qui n'analyse alors pas le problème de collision dans de bonnes conditions, et d'autre part pour les stations réceptrices qui n'échantillonnent jamais la donnée présente sur le réseau au même instant, ce qui peut entraîner des erreurs de transmission non justifiées.

Par ailleurs, les points d'échantillonnage de la station émettrice sont différents de ceux des stations réceptrices.

Sur la Fig.7, on a représenté des signaux illustrant le fonctionnement d'un second mode de réalisation de moyens de génération de l'état de la technique. Le principe de fonctionnement pour l'émission d'un bit est identique à celui décrit en regard des Fig.4 et 6, à part la resynchronisation du compteur par le signal de réinitialisation à chaque transition dans la donnée présente sur le réseau.

Le fonctionnement pour la réception est en tout point identique à celui utilisé pour l'émission.

Dans ce cas, on constate une imprécision moins importante que dans l'exemple de réalisation précédent, du point d'échantillonnage de la donnée présente sur le réseau pour la station émettrice.

Tous les échantillonnages sur les bus suivent la même régle quelque soit l'état des stations à savoir en émission ou en réception.

En contrepartie, le débit binaire sur le réseau n est plus constant comme c'est le cas dans l'exemple de réalisation décrit en regard des Fig.4, 5 et 6, car la station émettrice ne tient pas compte des retards de propagation lors de la génération des bits.

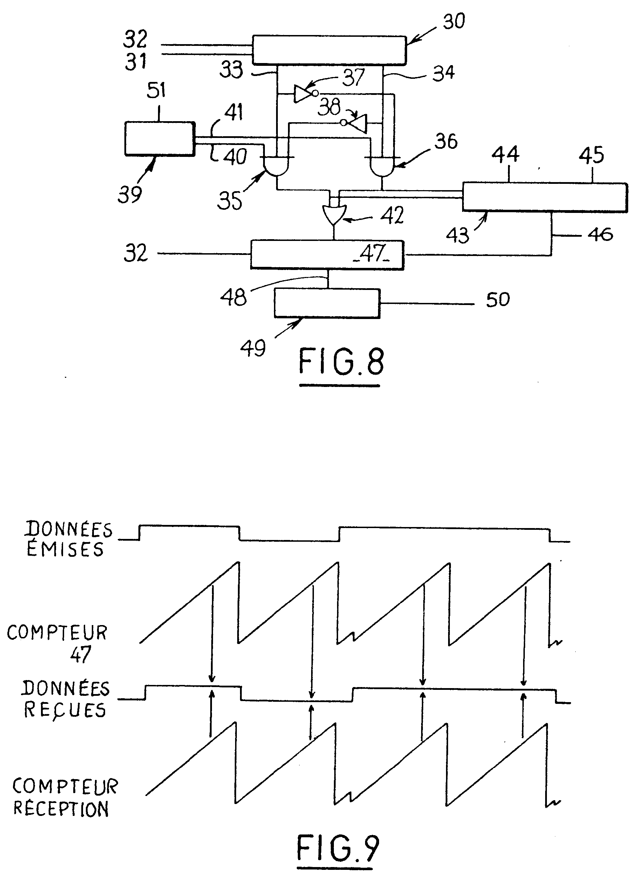

Le dispositif selon l'invention représenté sur la Fig.8, permet la resynchronisation des stations en fonction des données présentent sur le réseau en tenant compte des dispersions des fréquences d'horloge et des temps de propagation des données dans le réseau, pour la génération et l'analyse des trames.

Ainsi, un registre à décalage 30 reçoit un signal de données 31 présent sur le réseau et le décale au rythme de l'horloge locale 32 de la station à destination de ses sorties 33 et 34.

La sortie 33 de ce registre à décalage 30 est reliée à une entrée d'une porte ET 35 et à une entrée d'une porte ET 36 à travers un inverseur 37. La sortie 34 du registre à décalage 30 est reliée à une autre entrée de la porte ET 36 et à une autre entrée de la porte ET 35 à travers un inverseur 38. Un décodeur 39 dont le fonctionnement sera décrit plus en détail par la suite possède également deux sorties 40 et 41 reliées respectivement à une troisième entrée des portes ET 35 et 36. L'entrée de ce décodeur 39 reçoit un signal d'attaque qui, comme on le verra par la suite, est fixé par exemple par le constructeur du véhicule automobile.

Les sorties des portes ET 35 et 36 sont reliées à des entrées d'une porte OU 42, de même qu'à des entrées de moyens de sélection 43, dont le fonctionnement sera décrit plus en détail par la suite, et recevant sur des entrées des signaux 44 et 45 représentant des valeurs de synchronisation correspondant aux temps de propagation relatifs fronts montants et descendants des informations dans le réseau.

La sortie 46 de ces moyens de sélection est reliée à une entrée d'un compteur 47 recevant également sur des entrées, le signal de sortie de la porte 42 et le signal d'horloge locale 32.

Les signaux issus des portes 35 et 36 et reliés aux moyens de sélection 43 sont utilisés pour la sélection d'une des deux valeurs 44 ou 45, qui constitue alors la valeur de réinitialisation du compteur 47 du type modulo 16.

Ainsi qu'on l'a mentionné précédemment, ces valeurs 44 et 45 correspondent à des valeurs moyennes des temps de propagation relatifs aux fronts montants et descendants du signal de données dans le réseau, ces valeurs étant déterminées par exemple par essai et stockées dans des moyens de mémorisation de la station.

Le signal de sortie de la porte 42 active quant à lui l'entrée de chargement du compteur 47 en synchronisme des fronts du signal de données 31, les sorties 48 de ce compteur 47 étant reliées à des moyens de décodage 49 qui décodent ces sorties dans le but d'engendrer un top 50 d'échantillonnage du bit présent sur le réseau.

La sortie 46 du sélecteur 43 délivre une valeur de chargement qui décale le point de départ du compteur 47 et qui permet ainsi de tenir compte des temps de propagation des fronts dans le réseau.

On conçoit qu'ainsi le compteur 47 est resynchronisé par le signal de données présent sur le réseau en tenant compte des temps moyens de propagation associés aux fronts transmis, les valeurs 44 et 45 étant déterminées comme expliqué prédédemment.

Les différents signaux décrits ci-dessus sont représentés sur la Fig.9 où l'on peut voir que l'échantillonnage se produit au même instant.

Suivant le type d'application, il peut être nécessaire de n'utiliser pour la resynchronisation, qu'un seul type de front à un moment donné de l'éxécution. Cette sélection des fronts utiles est faite par l'intermédiaire des signaux 40 et 41 issus du décodeur 39, décrit en regard de la Fig. 8, ce décodeur 39 recevant lui-même un signal de consigne 51 provenant par exemple du reste des circuits de la station du véhicule, cette sélection s'opérant par présélection par le constructeur du véhicule.

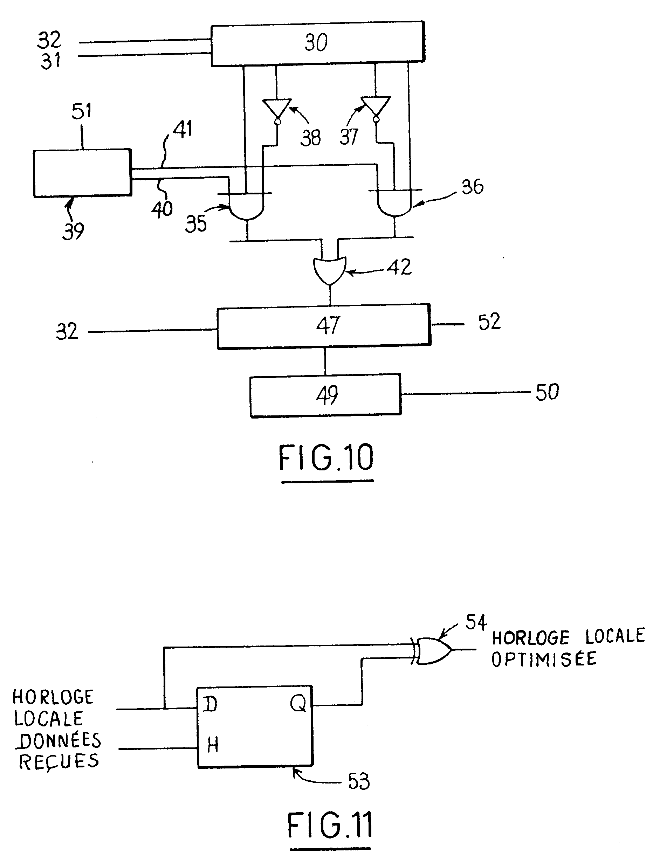

Il est également à noter que le choix de deux valeurs de préchargement du compteur 47 comme cela est décrit sur cette figure 8, par l'intermédiaire des moyens de sélection 43, peut être remplacé par le chargement d'une valeur moyenne 52 (Fig. 10) commune aux deux types de fronts à traiter.

Les impulsions de sortie des portes 35 et 36 sont combinées à l'aide de la porte OU 42 pour constituer un signal de chargement de la valeur moyenne 52 dans le compteur 19.

Cette valeur 52 étant commune aux deux types de fronts, il est nécessaire de choisir les sorties appropriées du registre à décalage 30 pour la génération des impulsions de sortie des portes 35 et 36 afin de garder un traitement du signal de données 31 similaire à celui décrit précédemment.

Lorsque le temps de propagation d'un front est inférieur au retard moyen associé à celui-ci ou éventuellement nul, les compteurs internes aux stations sont resynchronisés avant d'avoir terminé le cycle en cours, nécessitant d'atteindre la valeur maximale de comptage.

Ce phénomène, si le retard minimum peut effectivement être négligable, est dû aux tolérances d'horloge locale.

La solution employée pour pallier ces problèmes est l'attribution d'un retard systématique à la donnée reçue avant tout traitement de celle-ci, ce qui permet de s'affranchir des problèmes de tolérance d'horloge et de chargements non adaptés aux temps de propagation du signal de données. Ce décalage s'obtient très facilement par le choix approprié des sorties du registre à décalage 30 pour la génération des impulsions relatives aux fronts du signal de données.

Le défaut commun aux différents principes décrits précédemment est l'absence totale de traitement des données durant en moyenne deux périodes d'horloge après leur apparition.

Cette lacune peut être minimisée par l'utilisation du circuit représenté sur la Fig. 11, dans laquelle une bascule D 53 reçoit sur ses entrées, d'une part le signal de données reçu et d'autre part le signal d'horloge locale, ce signal d'horloge locale ainsi que la sortie de la bascule 53 étant reliés aux entrées d'une porte OU-EXCLUSIF 54 dont la sortie constitue une horloge locale optimisée.

La resynchronisation du compteur par chargement de la valeur moyenne associée au temps de propagation des fronts du signal présent sur la ligne, permet donc d'effectuer un traitement de données approprié, intégrant les réalités physiques du réseau.

En fixant le retard à une valeur moyenne prédéterminée, une station en émission peut parfaitement s'auto-synchroniser sans ralentissement du débit binaire sur le réseau.

Cette resynchronisation a également une large tolérance d'horloge et des systèmes d'interfaçage au bus, dont les performances sont peu élevées, car le signal de resynchronisation peut apparaître entre les points d'émission et le point d'échantillonnage fixé ici aux trois-quart de la durée du bit, ce délai étant compensé par le chargement du compteur.

Enfin, cette resynchronisation est totalement indépendante de l'état d'émission ou de réception de la station, de sorte que par conséquent, tous les échantillonnages sur le bus suivent la même règle.

## Revendications

1. Dispositif de synchronisation de l'émission et de la réception d'une station d'un réseau de communication notamment pour véhicule automobile, du type comportant des moyens (30,35,36,37,38,42,47,49) de génération de signaux d'échantillonnage d'informations présentes sur le réseau, caractérisé en ce qu'il comporte des moyens (43) de chargement dans les moyens de génération, d'au moins une valeur de synchronisation (44,45;52) correspondant à au moins un temps de propagation des informations dans le réseau pour synchroniser la station en fonction de caractéristiques de transmission du réseau, par décalage des moyens de génération, cette valeur de synchronisation correspondant au temps de propagation d'un front montant ou d'un front descendant ou à un temps moyen de propagation des fronts montants et descendants des informations dans le réseau.

2. Dispositif selon la revendication 1, caractérisé en ce que les moyens de chargement comprennent des moyens (43) de sélection de l'une ou l'autre de deux valeurs (44,45) de synchronisation en fonction du type de fronts d'informations présents sur le réseau, les valeurs de synchronisation correspondant l'une au temps de propagation d'un front montant d'informations dans le réseau et l'autre au temps de propagation d'un front descendant.

3. Dispositif selon la revendication 1, caractérisé en ce que la valeur de synchronisation (52) correspond à un temps moyen de propagation des fronts montants et descendants dans le réseau.

4. Dispositif selon l'une quelconque des revendications précédentes, caractérisé en ce qu'il comporte des moyens (39) de sélection du type de fronts d'informations utilisés pour la synchronisation.

## Patentansprüche

1. Sende- und Empfangssynchronisationsvorrichtung einer Station eines Kommunikationsnetzes, insbesondere für ein Kraftfahrzeug, welche die Medien (30, 35, 36, 37, 38, 42, 47, 49) zur Erzeugung von Testsignalen für die im Netz vorhandenen Informationen enthält, **dadurch gekennzeichnet, daß** sie in den Mitteln zur Erzeugung die Medien (43) zum Laden von mindestens einem Synchronisationswert (44, 45, 52) enthält, der zumindest einer Ausbreitungszeit der Informationen im Netz entspricht, um die Station je nach den Übertragungsmerkmalen des Netzes durch eine Verschiebung der Erzeugungsmittel zu synchronisieren, wobei dieser Synchronisationswert der Ausbreitungszeit einer ansteigenden oder abfallenden Flanke oder einer durchschnittlichen Ausbreitungszeit der ansteigenden und abfallenden Flanken der Informationen im Netz entspricht.

2. Vorrichtung gemäß Anspruch 1, **dadurch gekennzeichnet, daß** die Lademedien Mittel (43) zur Auswahl des einen oder des anderen der beiden Synchronisationswerte (44, 45) enthalten, je nach der Art der im Netz vorhandenen Informationsflanken, wobei ein Synchronisationswert der Ausbreitungszeit einer ansteigenden Informationsflanke im Netz und der andere der Ausbreitungszeit einer abfallenden Flanke entspricht.

3. Vorrichtung gemäß Anspruch 1, **dadurch gekennzeichnet, daß** der Synchronisationswert (52) einer durchschnittlichen Ausbreitungszeit der ansteigenden und abfallenden Flanken im Netz entspricht.

4. Vorrichtung gemäß jedem beliebigen vorherigen Anspruch, **dadurch gekennzeichnet, daß** sie Mittel (39) zur Auswahl der Informationsflanken enthält, die für die Synchronisation verwendet werden.

## Claims

1. Device for synchronizing the sending and receiving by a station of a communication network especially for automotive vehicle, of the type including means (30,35,36,37,38,42,47,49) for generating signals for sampling information present on the network, characterized in that it includes means (43) for loading into the generating means at least one synchronization value (44,45;52) corresponding to at least one time of propagation of the information in the network so as to synchronize the station on the basis of network transmission characteristics, by shifting the generating means, this synchronization value corresponding to the time of propagation of a rising edge or of a falling edge or to a mean time of propagation of the rising and falling edges of the information in the network.

2. Device according to Claim 1, characterized in that the loading means comprise means (43) for selecting one or the other of two synchronization values (44,45) on the basis of the type of information edges present on the network, one of the synchronization values corresponding to the time of propagation of a rising edge of information in the network and the other to the time of propagation of a falling edge.

3. Device according to Claim 1, characterized in that the synchronization value (52) corresponds to a mean time of propagation of the rising and falling edges in the network.

4. Device according to any one of the preceding claims, characterized in that it includes means (39) for selecting the type of information edges used for synchronization.
